Europäisches Patentamt

European Patent Office

Office européen des brevets

(11) Veröffentlichungsnummer : **0 346 575 B1**

(12) **EUROPÄISCHE PATENTSCHRIFT**

(45) Veröffentlichungstag der Patentschrift :
29.01.92 Patentblatt 92/05

(51) Int. Cl.$^5$ : **G01D 5/26**

(21) Anmeldenummer : **89105337.3**

(22) Anmeldetag : **25.03.89**

(54) **Sicherungsvorrichtung für eine Messeinrichtung.**

(30) Priorität : **15.06.88 DE 3820331**

(43) Veröffentlichungstag der Anmeldung :
**20.12.89 Patentblatt 89/51**

(45) Bekanntmachung des Hinweises auf die
Patenterteilung :
**29.01.92 Patentblatt 92/05**

(84) Benannte Vertragsstaaten :
**AT CH DE ES FR GB IT LI NL SE**

(56) Entgegenhaltungen :
**DE-A- 2 349 944**
**DE-A- 3 020 003**
**US-A- 3 942 895**
**US-A- 4 031 595**

(73) Patentinhaber : **Dr. Johannes Heidenhain GmbH**
**Dr.-Johannes-Heidenhain-Strasse 5 Postfach 1260**
**W-8225 Traunreut (DE)**

(72) Erfinder : **Falkinger, Bernhard, Dipl.-Ing. (FH)**
**Mühltal 3**
**W-8221 Nussdorf (DE)**
Erfinder : **Schopf, Reinhold, Dipl.-Ing. (FH)**
**Ginzing 5**
**W-8226 Altenmarkt (DE)**

EP 0 346 575 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine mehrteilige Sicherungsvorrichtung für eine Meßeinrichtung gemäß dem Oberbegriff des Anspruches 1.

Derartige Sicherungsvorrichtungen sind insbesondere für Transport und Montage von Meßeinrichtungen vorgesehen, damit die empfindlichen Bauteile der Meßeinrichtungen geschont werden und der Anwender — im allgemeinen der Werkzeugmaschinenhersteller — die Meßeinrichtungen ohne Probleme an der Maschine montieren kann.

Aus der DE-A-2349944, die auf der US-A-3833303 basiert, ist eine derartige Sicherungsvorrichtung bekannt. Ein Ausrichtarm ist sowohl an einem Balken als auch an einem Gehäuse verschraubt und positioniert das Gehäuse in bezug auf den Balken und damit auf den Maßstab genauestens. Durch die Verschraubungen läßt sich der Ausrichtarm auch wiederholt verwenden.

Ferner ist aus der DE-A-3020003 eine zweiteilige Sicherungsvorrichtung bekannt, die an den Stirnseiten des Montagefußes im Hohlkörper durch Schrauben verspannt wird und so den Montagefuß gegen zufälliges Verschieben sichert.

Nachteilig bei derartigen Sicherungsvorrichtungen ist die erforderliche Verschraubung der einzelnen Sicherungselemente.

Aufgabe der Erfindung ist es, eine Sicherungsvorrichtung zu schaffen, die aus einfachen Teilen aufgebaut und besonders leicht zu montieren ist.

Diese Aufgabe wird druch eine Sicherungsvorrichtung mit den Merkmalen des Anspruches 1 gelöst.

Vorteilhafte Ansgestaltungen entnimmt man den abhängigen Ansprüchen.

Die Vorteile der erfindungsgemäßen Sicherungsvorrichtung liegen darin, daß sie aus einfachen Kunststoff-Spritzgußteilen besteht, die einzeln am Trägerkörper befestigt werden können. Durch einfaches Zusammenfügen der beiden Sicherungsvorrichtungsteilen wird der Montagefuß stirnseitig erfaßt und gesichert.

Anhand der Zeichnungen soll mit Hilfe von Ausführungsbeispielen die Erfindung noch näher erläutert werden. Es zeigt

Figur 1     einen Abschnitt einer Meßeinrichtung mit Sicherungsvorrichtung,
Figur 2     eine Seitenansicht der Vorrichtung in Figur 1,
Figur 3     eine Draufsicht derselben und
Figur 4     eine Ansicht mit anderer Verbindungsmechanik und anderer Montagefußhalterung.

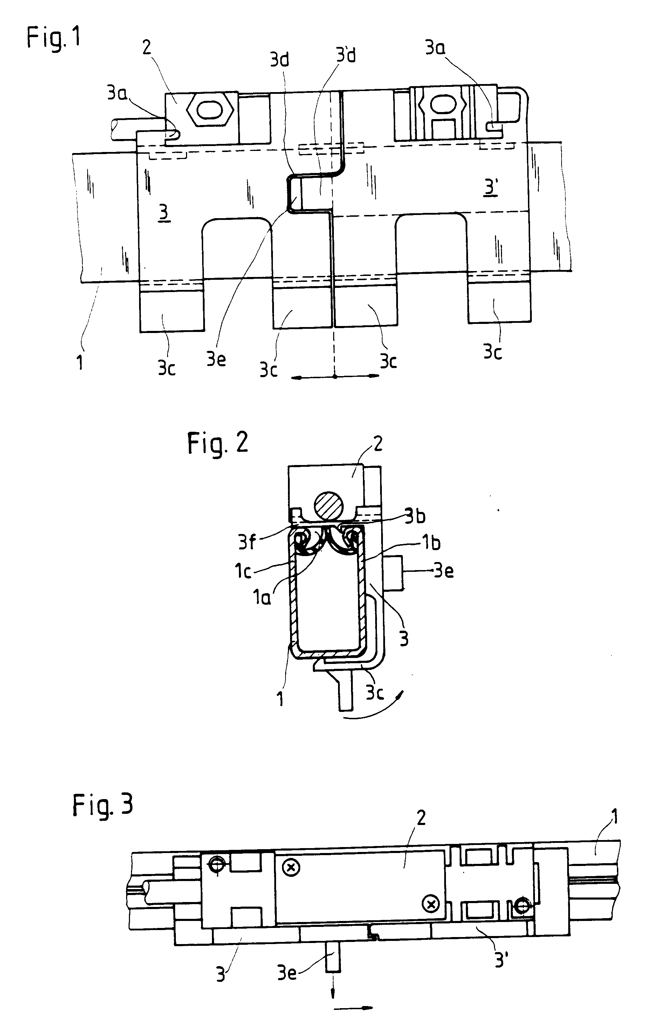

In der Figur 1 ist ein Teil eines Hohlkörpers 1 einer Längenmeßeinrichtung dargestellt. Ein Montagefuß 2 ragt aus dem Hohlkörper 1 heraus. Auf beiden Seiten des Montagefußes 2 sind Sicherungsvorrichtungen 3 und 3′ angeordnet. Mit Justierlaschen 3a stützen sie den Montagefuß 2 in ausreichend genauem Abstand gegenüber dem Hohlkörper 1 ab.

Die Justierlaschen 3a sind so an den Sicherungsvorrichtungen 3, 3′ angebracht, daß in jedem Fall eine seitenrichtige Montage gewährleistet ist.

Mit Ansätzen 3b sind die Sicherungsvorrichtungen 3, 3′ im Längsschlitz 1a des Hohlprofils 1 verankert und federnde Laschen 3c umgreifen das Hohlprofil 1. Die Ansätze 3b bilden den Formschluß und die federnden Laschen 3c den Kraftschluß.

Eine Verschiebung des Montagefußes 2 ist bei mäßigem Kraftaufwand möglich, aber bei transportbedingten Erschütterungen und Beschleunigungen bleibt der Montagefuß 2 in seiner Lage zum Hohlprofil 1 fixiert.

Die beiden Teile 3 und 3′ verfügen über zusammenwirkende Mittel an einem Teil 3′ in Form einer Verriegelungslasche 3′d die in eine Aussparung 3d am anderen Teil 3 der Sicherungsvorrichtung eingreift und die beiden Teile 3, 3′ verriegelt. Die Verriegelungslasche 3′d endet in einem Ansatz 3e mit dem die Teile 3 und 3′ manuell entriegelt werden können.

Die vereinigten Teile 3, 3′ der Sicherungsvorrichtung halten sich gegenseitig in der Sicherungsposition, so daß eine zusätzliche Fixierung in Längsrichtung entfallen kann.

Die beiden Teile 3 und 3′ werden zur Montage jeweils rechts und links vom Montagefuß 2 auf den Hohlkörper 1 geklipst und in Richtung auf den Montagefuß 2 gegen dessen Stirnseiten geschoben, bis die Justierlaschen 3a den Montagefuß 2 lagerichtig abstützen. In dieser Lage schnappt die Verriegelungslasche 3′d in die Aussparung 3d ein und die Sicherungsvorrichtung ist fertig montiert.

Zur Demontage werden die beiden Teile 3 und 3′ mit Hilfe des Ansatzes 3e manuell entriegelt und die beiden Teile 3 und 3′ vom Montagefuß 2 entfernt.

Die Figuren 2 und 3 zeigen verschiedene Ansichten der montierten Sicherungsvorrichtung, die im Zusammenhang mit der Figur 1 nicht näher erläutert werden müssen, da sie dem Fachmann den Aufbau der Sicherungsvorrichtung hinreichend verdeutlichen.

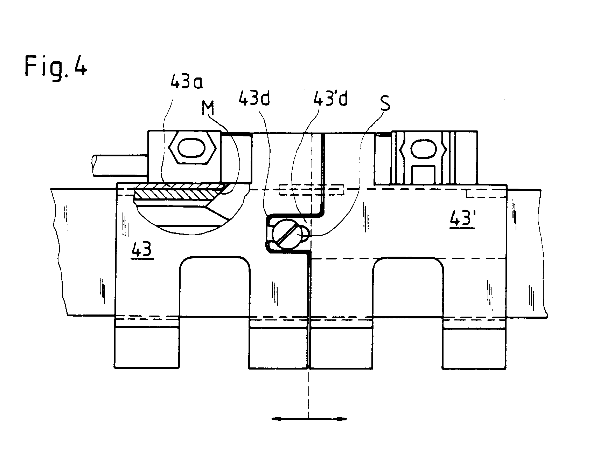

Beim Ausführungsbeispiel gemäß Figur 4 sind die zusammenwirkenden Mittel und die Justierlaschen anders ausgebildet. Da die übrigen Elemente nicht anders ausgestaltet sind als beim ersten Ausführungsbeispiel, sind sie nicht mit Bezugszeichen versehen worden. Teil 43 der Sicherungsvorrichtung weist eine Aufnahmetasche 43d auf, die auf ihrer dem Hohlprofil zugewandten Seite eine Gewindemutter als Einsatzmutter aufnehmen kann. Selbstverständlich kann auch in die Wandung der Aufnahmetasche 43d ein Gewinde geschnitten sein. Das Gegenstück — eine Schlitzlasche 43′d — greift in die Aufnahmetasche 43d derart ein, daß mit einer Schraube S, die durch den Schlitz der Schlitzlasche 43′d in das Gewinde der Mutter eingedreht wird, die beiden Teile 43 und 43′ in der Sicherungsposition fest miteinander verbunden sind. Nach Lösen der Schraube S lassen sich die Teile 43 und 43′ der Sicherungsvorrichtung vom Montagefuß abziehen und vom Hohlkörper abklipsen.

Selbstverständlich kann die Schraube auch durch ein anderes Verriegelungselement wie Exzenter oder Bajonettverschluß ersetzt werden.

Bei diesem Ausführungsbeispiel wird die Justierung des Montagefußes durch Justierlaschen 43a erzielt, die unterhalb des aus dem Hohlkörper herausragenden Montagefußes an einem konisch geformten Mitnehmer M angreifen, der den Montagefuß in bekannter Weise mit der Abtasteinrichtung im Innern des Hohlkörpers verbindet. Auf eine detailliertere zeichnerische Darstellung wurde verzichtet, da dies zur Verdeutlichung der Erfindung nichts beiträgt.

Bei beiden Ausführungsbeispielen stützt sich beim Abklipsen vom Hohlkörper 1 das abzunehmende Teil 3, 43 oder 3′, 43′, über einen Steg 3f an einem Schenkel 1c ab, der einem Schenkel 1b gegenüberliegt. Die Schenkel 1b und 1c schließen den Längsschlitz 1a ein.

## Patentansprüche

1. Mehrteilige Sicherungsvorrichtung für eine Meßeinrichtung zur Lagebestimmung zweier relativ zueinander beweglicher Bauteile, mit einer Meßteilung, einem die Meßteilung tragenden Trägerkörper (1) und einer die Meßteilung abtastenden Abtasteinrichtung, die in konstantem Abstand zur Meßteilung geführt ist, mit einem Montagefuß (2), mit dessen Hilfe die Abtasteinrichtung an einem der beweglichen Bauteile befestigt werden kann, wobei der Montagefuß (2) mittels Abstandshaltern (3a, 43a) durch die Sicherungsvorrichtung gegenüber dem Trägerkörper (1) in seiner Sollage gehalten wird, wobei jedes Teil (3, 3′ ; 43, 43′) der Sicherungsvorrichtung eine für sich am Trägerkörper (1) fixierbare Einheit darstellt, dadurch gekennzeichnet, daß die Teile (3, 3′ ; 43, 43′) Mittel (3d, 3′d ; 43d, 43′d) aufweisen, durch deren Zusammenwirken diese Teile (3, 3′ ; 43, 43′) in der Sicherungsposition vereinigt sind.

2. Mehrteilige Sicherungsvorrichtung nach Anspruch 1, dadurch gekennzeichnet, daß die zusammenwirkenden Mittel als Verriegelungslasche (3′d) und als Aussparung (3d) ausgebildet sind.

3. Mehrteilige Sicherungsvorrichtung nach Anspruch 1, dadurch gekennzeichnet, daß die zusammenwirkenden Mittel als verschraubbare Schlitzlasche (43′d) und als Aufnahmetasche (43d) ausgebildet sind.

4. Mehrteilige Sicherungsvorrichtung nach Anspruch 1, dadurch gekennzeichnet, daß die Teile (3, 3′) jeweils durch form- und/oder kraftschlüssige Elemente (3b, 3c) am Trägerkörper (1) fixierbar sind.

5. Mehrteilige Sicherungsvorrichtung nach Anspruch 4, dadurch gekennzeichnet, daß die formschlüssigen Elemente als Ansätze (3b) ausgebildet sind, die an einem Schenkel (1b) eines Längsschlitzes (1a) des als Hohlprofil ausgebildeten Trägerkörpers (1) angreifen.

6. Mehrteilige Sicherungsvorrichtung nach Anspruch 4, dadurch gekennzeichnet, daß die kraftschlüssigen Elemente als federnde Laschen (3c) ausgebildet sind, die den als Hohlprofil ausgebildeten Trägerkörper (1) teilweise umgreifen.

7. Mehrteilige Sicherungsvorrichtung nach Anspruch 4 und 5, dadurch gekennzeichnet, daß die Ansätze (3b) an Stegen (3c) angeformt sind, die die Teile (3, 3′ ; 43, 43′) an einem Schenkel (1c) des Längsschlitzes (1a) abstützen, der den Ansätzen (3b) gegenüber liegt.

8. Mehrteilige Sicherungsvorrichtung nach Anspruch 1, dadurch gekennzeichnet, daß der Montagefuß (2) mit der Sicherungsvorrichtung an dem Trägerkörper (1) selbsthemmend, aber durch äußere Krafteinwirkung verschiebbar gelagert ist.

## Claims

1. Multi-part security arrangement for a measuring device for determining the position of two components movable relative to one another, with a measuring graduation, a support body (1) carrying the measuring graduation and a sensing device sensing the measuring graduation, which device is moved at a constant spacing from the measuring graduation, with a mounting foot (2), with the aid of which the sensing device can be mounted on one of the movable components, wherein the mounting foot (2) is held in its set position relative to the support body (1) through the security arrangement by means of spacers (3a, 43a), wherein each part (3, 3' ; 43, 43') of the security arrangement represents a unit adapted to be fixed by itself on the support body (1), characterized in that the parts (3, 3' ; 43, 43') have means (3d, 3'd ; 43d, 43'd) through whose cooperation these parts (3, 3' ; 43, 43') are united in the securing position.

2. Multi-part security arrangement according to claim 1, characterized in that the cooperating means are formed as a locking tongue (3'd) and a recess (3d).

3. Multi-part security arrangement according to claim 1, characterized in that the cooperating means are formed as a screw-up slotted tongue (43'd) and a receiving pocket (43d).

4. Multi-part security arrangement according to claim 1, characterized in that the parts (3, 3') are each adapted to be fixed to the support body (1) by interlocking and/or frictional elements (3b, 3c).

5. Multi-part security arrangement according to claim 4, characterized in that the interlocking elements are formed as projections (3b) which engage with a side (1b) of an elongated slot (1a) of the support body (1) formed as a hollow section.

6. Multi-part security arrangement according to claim 4, characterized in that the frictional elements are formed as spring tongues (3c), which engage partially around the support body (1) formed as a hollow section.

7. Multi-part security arrangement according to claims 4 and 5, characterized in that the projections (3b) are formed on webs (3c) which support the parts (3, 3' ; 43, 43') on a side (1c) of the elongated slot (1a) which lies opposite to the projections (3b).

8. Multi-part security arrangement according to claim 1, characterized in that the mounting foot (2) with the security arrangement is mounted in self-retaining manner in the support body (1) but so as to be capable of displacement by application of an external force.

## Revendications

1. Dispositif de blocage en plusieurs parties pour un dispositif de mesure pour la détermination de position de deux composants mobiles l'un par rapport à l'autre, avec une graduation de mesure, un corps-support (1) portant la graduation de mesure et un dispositif de lecture lisant la graduation de mesure à distance constante de laquelle il est guidé, avec un pied de montage (2) à l'aide duquel le dispositif de lecture peut être fixé à l'un des composants mobiles, le pied de montage (2) étant maintenu, par le dispositif de blocage, dans sa position théorique par rapport au corps-support (1), au moyen d'organes d'écartement (3a, 43a), chaque partie (3, 3' ; 43, 43') du dispositif de blocage constituant une unité apte à être fixée par elle-même au corps-support (1), caractérisé par le fait que les parties (3, 3' ; 43, 43') présentent des moyens (3d, 3'd ; 43d, 43'd) par la coopération desquels les parties (3, 3' ; 43, 43') sont réunies dans la position de blocage.

2. Dispositif de blocage en plusieurs parties selon revendication 1, caractérisé par le fait que les moyens coopérant sont réalisés en tant que patte de verrouillage (3'd) et en tant qu'évidement (3d).

3. Dispositif de blocage en plusieurs parties selon revendication 1, caractérisé par le fait que les moyens coopérant sont réalisés en tant que patte fendue (43'd) pouvant être fixée par vis et en tant que logement récepteur (43d).

4. Dispositif de blocage en plusieurs parties selon revendication 1, caractérisé par le fait que les parties (3, 3') peuvent être fixées chacune au corps-support (1) par des éléments de liaison par conjugaison de formes et/ou de liaison par serrage (3b, 3c).

5. Dispositif de blocage en plusieurs parties selon revendication 4, caractérisé par le fait que les éléments de liaison par conjugaison de formes sont réalisés en tant qu'appendices (3b) attaquant un côté (1b) de la fente longitudinale (1a) du corps-support (1) réalisé en tant que profilé creux.

6. Dispositif de blocage en plusieurs parties selon revendication 4, caractérisé par le fait que les éléments de liaison par serrage sont réalisés en tant que pattes déformables élastiquement (3c) qui entourent partiellement le corps-support (1) réalisé en tant que profilé creux.

7. Dispositif de blocage en plusieurs parties selon revendications 4 et 5, caractérisé par le fait que les appendices (3b) sont formés sur des pattes (3c) qui appuient les parties (3, 3' ; 43, 43') contre un côté (1c) de la fente longitudinale (1a) qui se trouve en vis-à-vis des appendices (3b).

8. Dispositif de blocage en plusieurs parties selon revendication 1, caractérisé par le fait que le pied de montage (2) avec le dispositif de blocage est monté avec autoblocage sur le corps-support (1), toutefois avec possibilité de déplacement en translation sous l'action de forces extérieures.

**Fig. 1**

**Fig. 2**

**Fig. 3**

Fig.4

43a  M  43d  43'd  S

43  43'